# EUROPEAN PATENT APPLICATION

(11) **EP 4 813 718 A1**
(43) Date of publication of application: **30.09.2026**
(21) Application number: 26165767.0
(22) Date of filing: 18.03.2026
(51) Int. Cl.: B60K 35/81, B60L 50/60

(54) **CONTROL DEVICE, CONTROL METHOD, AND CONTROL PROGRAM**

(30) Priority: 26.03.2025 JP 2025051639
(71) Applicant: Toyota Jidosha Kabushiki Kaisha, Toyota-shi, Aichi-ken 471-8571 (JP)
(72) Inventor: Hiraki, Yuta, Toyota-shi, 471-8571 (JP)
(74) Representative: J A Kemp LLP

(57) **Abstract**

A control device installed in a vehicle 100 includes: an electric power amount acquisition unit 331 configured to acquire an electric power consumption amount consumed by each of a plurality of control functions of the vehicle while the vehicle is traveling and while the vehicle is stopped; and a display control unit 332 configured to cause a display device 26 of the vehicle to display, for each of the plurality of control functions, a parameter that varies according to an electric power consumption amount consumed by the control function while the vehicle is traveling and a parameter that varies according to an electric power consumption amount consumed by the control function while the vehicle is stopped.

## Description

### FIELD

The present disclosure relates to a control device, a control method, and a control program.

### BACKGROUND

In the related art, an in-vehicle control device is known which, in order to enable a user to grasp how much electric power can be used for traveling of a vehicle and operations of in-vehicle devices, acquires an electric power amount stored in a battery, allocates the acquired electric power amount to each control function such as traveling of the vehicle and operations of in-vehicle devices, and displays the allocated electric power amount on a display (JP 2013-027234 A).

However, in JP 2013-027234 A, a user of a vehicle cannot necessarily sufficiently grasp how electric power is consumed in each control function of the vehicle. As a result, the user cannot appropriately execute each control function in consideration of electric power consumption.

In view of the above problem, an object of the present disclosure is to enable a user of a vehicle to more accurately grasp how electric power is consumed in each control function of the vehicle.

### SUMMARY

The present disclosure includes the following aspects.
(1) A control device installed in a vehicle, the control device comprising:
   an electric power amount acquisition unit configured to acquire an electric power consumption amount consumed by each of a plurality of control functions of the vehicle while the vehicle is traveling and while the vehicle is stopped; and
   a display control unit configured to cause a display device of the vehicle to display, for each of the plurality of control functions, a parameter that varies according to an electric power consumption amount consumed by the control function while the vehicle is traveling and a parameter that varies according to an electric power consumption amount consumed by the control function while the vehicle is stopped.
(2) The control device according to above (1), wherein the parameter that varies according to the electric power consumption amount consumed by each control function while the vehicle is traveling or while the vehicle is stopped is a ratio of the electric power consumption amount consumed by the control function while the vehicle is traveling or while the vehicle is stopped to a total electric power consumption amount consumed by the vehicle.
(3) The control device according to above (1), wherein the parameter that varies according to the electric power consumption amount consumed by each control function while the vehicle is traveling or while the vehicle is stopped is the electric power consumption amount consumed by the control function while the vehicle is traveling or while the vehicle is stopped.
(4) The control device according to any one of above (1) to (3), wherein
   the display control unit displays a value of the parameter that varies according to the electric power consumption amount as a figure having an area that varies according to the value of the parameter, and
   a figure corresponding to a parameter that varies according to an electric power consumption amount consumed by one of the plurality of control functions while the vehicle is traveling and a figure corresponding to a parameter that varies according to an electric power consumption amount consumed by the same control function while the vehicle is stopped are displayed adjacent to each other.
(5) The control device according to any one of above (1) to (4), further comprising an upper limit setting unit configured to set an upper limit value of a parameter that varies according to an electric power consumption amount consumed by each of at least one of the plurality of control functions,
   wherein the display control unit causes the display device to display the upper limit value of the parameter in addition to a value of each of the parameters.
(6) The control device according to any one of above (1) to (5), further comprising:
   an upper limit setting unit configured to set an upper limit value of a parameter that varies according to an electric power consumption amount consumed by each of at least one of the plurality of control functions; and
   a function restriction unit configured to, when a value of a parameter that varies according to an electric power consumption amount consumed by one of the plurality of control functions of the vehicle exceeds an upper limit value corresponding to the one of the plurality of control functions, suppress or stop the one of the plurality of control functions or to prompt an occupant of the vehicle to suppress or stop the one of the plurality of control functions.
(7) The control device according to above (6), wherein, when the value of the parameter that varies according to the electric power consumption amount consumed by the one of the plurality of control functions of the vehicle exceeds the upper limit value corresponding to the one of the plurality of control functions, the function restriction unit notifies the occupant of the vehicle of a request for consent or refusal to switch control in the one of the plurality of control functions to a mode in which the electric power consumption by the one of the plurality of control functions is reduced.
(8) The control device according to above (6), wherein, when the value of the parameter that varies according to the electric power consumption amount consumed by the one of the plurality of control functions of the vehicle exceeds the upper limit value corresponding to the one of the plurality of control functions, the function restriction unit provides the occupant of the vehicle with a notification prompting to switch control in the one of the plurality of control functions to a mode in which the electric power consumption by the one of the plurality of control functions is reduced.
(9) The control device according to above (7) or (8), wherein, after the function restriction unit provides a user with the notification for the one of the plurality of control functions, even when the value of the parameter that varies according to the electric power consumption amount consumed by the one of the plurality of control functions again exceeds the upper limit value corresponding to the one of the plurality of control functions, the function restriction unit does not provide the notification until an ignition of the vehicle is turned off.
(10) The control device according to above (6), wherein, when the value of the parameter that varies according to the electric power consumption amount consumed by the one of the plurality of control functions of the vehicle exceeds the upper limit value corresponding to the one of the plurality of control functions, the function restriction unit switches control in the one of the plurality of control functions to a mode in which the electric power consumption by the one of the plurality of control functions is reduced.
(11) The control device according to above (10), wherein, when the value of the parameter that varies according to the electric power consumption amount consumed by the one of the plurality of control functions of the vehicle exceeds the upper limit value corresponding to the one of the plurality of control functions, the function restriction unit stops the one of the plurality of control functions.
(12) The control device according to any one of above (6) to (11), wherein, when a total electric power consumption amount of the vehicle acquired by the electric power amount acquisition unit is less than a predetermined reference electric power amount, even if the value of the parameter that varies according to the electric power consumption amount consumed by the one of the plurality of control functions of the vehicle exceeds the upper limit value corresponding to the one of the plurality of control functions, the function restriction unit neither suppresses or stops the one of the plurality of control function nor prompts the occupant to suppress or stop the one of the plurality of control functions.
(13) A control method performed by a control device of a vehicle, the control method comprising:
   acquiring an electric power consumption amount consumed by each of a plurality of control functions of the vehicle while the vehicle is traveling and while the vehicle is stopped; and
   causing a display device of the vehicle to display, for each of the plurality of control functions, a parameter that varies according to an electric power consumption amount consumed by the control function while the vehicle is traveling and a parameter that varies according to an electric power consumption amount consumed by the control function while the vehicle is stopped.
(14) A control program used in a vehicle for causing a computer of the vehicle to execute:
   acquiring an electric power consumption amount consumed by each of a plurality of control functions of the vehicle while the vehicle is traveling and while the vehicle is stopped; and
   causing a display device of the vehicle to display, for each of the plurality of control functions, a parameter that varies according to an electric power consumption amount consumed by the control function while the vehicle is traveling and a parameter that varies according to an electric power consumption amount consumed by the control function while the vehicle is stopped.

### BRIEF DESCRIPTION OF DRAWINGS

FIG. 1 is a schematic block diagram illustrating a configuration of a vehicle control system.
FIG. 2 is a functional block diagram of a processor of an ECU.
FIG. 3 illustrates an example of a screen showing electric power information displayed on a display by a display control unit.
FIG. 4 illustrates an example of a setting screen displayed on the display by an upper limit setting unit.
FIG. 5 is a flowchart showing a flow of electric power amount management processing.
FIG. 6 is a flowchart showing a flow of air-conditioning restriction processing.
FIG. 7 is a flowchart showing a flow of battery temperature restriction processing.
FIG. 8 is a flowchart showing a flow of electric system restriction processing.

### DESCRIPTION OF EMBODIMENTS

Hereinafter, embodiments will be described in detail with reference to the drawings. Note that, in the following description, similar components are denoted by the same reference numerals.

### Configuration of Vehicle Control System

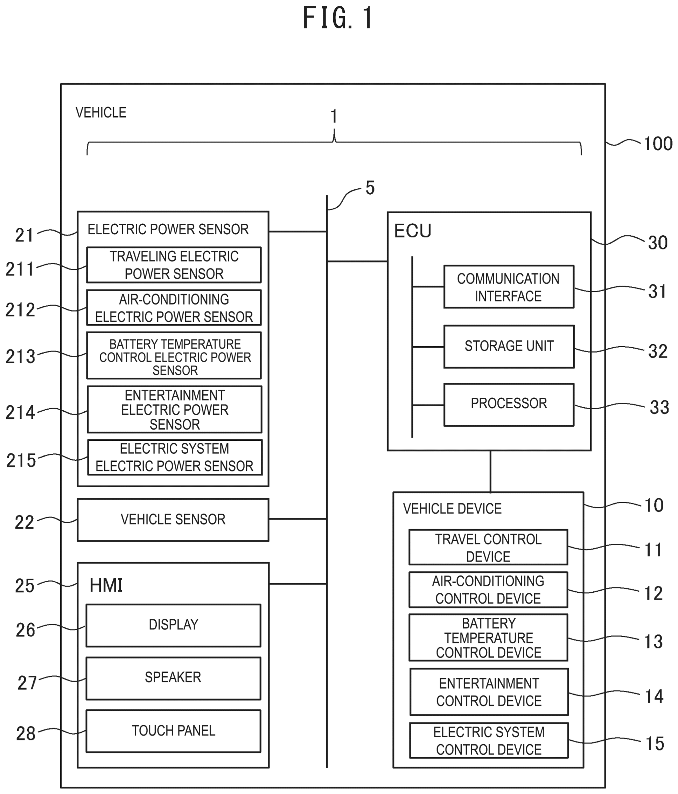

A configuration of a vehicle control system 1 including a control device according to one embodiment will be described with reference to FIG. 1. The control device executes a plurality of control functions in a vehicle 100. In addition, the control device controls display on a display of the vehicle 100 and restricts the control functions based on an electric power consumption amount. FIG. 1 is a schematic block diagram illustrating a configuration of the vehicle control system 1.

The vehicle control system 1 is installed in the vehicle 100. In the present embodiment, the vehicle 100 is an electric vehicle (BEV, PHEV, HEV) that is at least partially driven by electric power. The vehicle control system 1 executes the plurality of control functions in the vehicle 100. As illustrated in FIG. 1, in the present embodiment, the vehicle control system 1 includes a vehicle device 10, an electric power sensor 21, a vehicle sensor 22, a human machine interface (hereinafter, referred to as HMI) 25, and an electronic control unit (hereinafter referred to as "ECU") 30. The vehicle device 10, the electric power sensor 21, the vehicle sensor 22, the HMI 25, and the ECU 30 are communicably connected to each other via an in-vehicle network 5. The in-vehicle network 5 is a network compliant with a standard, for example, a controller area network (CAN) or the like. Further, the ECU 30 is connected to the vehicle device 10 via a signal line.

The vehicle device 10 is a device for executing the control functions of the vehicle 100. The control functions of the vehicle 100 include, for example, a traveling control function of the vehicle 100, an air-conditioning control function of the vehicle 100, a battery temperature control function of the vehicle 100, an entertainment control function of the vehicle 100, and an electric system control function of the vehicle 100. Therefore, in the present embodiment, the vehicle device 10 includes a traveling control device 11, an air-conditioning control device 12, a battery temperature control device 13, an entertainment control device 14, and an electric system control device 15. The vehicle device 10 may also include other devices that execute the control functions of the vehicle 100. The vehicle device 10 controls execution of each control function of the vehicle 100 in accordance with control signals transmitted from the ECU 30 via the signal line.

The traveling control device 11 is a device for performing acceleration and braking necessary for the vehicle 100 to travel. Therefore, the traveling control device 11 includes, for example, an electric motor that drives the vehicle 100, a generator that brakes the vehicle 100, and the like. When steering of the vehicle 100 is electrically performed, the traveling control device 11 may include a steering motor. In addition, the air-conditioning control device 12 is a device for controlling a temperature in the interior of the vehicle 100 by sending warm air or cold air into the vehicle 100. Therefore, the air-conditioning control device 12 includes, for example, an air conditioner of the vehicle 100, and particularly, a compressor, a blower fan, and the like in the air conditioner. In addition, the battery temperature control device 13 is a device for controlling a temperature of a secondary battery (such as a lithium-ion battery; not illustrated) of the vehicle 100. Therefore, the battery temperature control device 13 includes, for example, a pump for causing cooling water flowing around the secondary battery to flow, a heater or a cooler for controlling a temperature of the cooling water, and the like. Further, the entertainment control device 14 is a device for providing entertainment to an occupant of the vehicle 100. Therefore, the entertainment control device 14 includes, for example, a rear seat entertainment system (hereinafter, referred to as "RSE system") including a display capable of playing videos toward an occupant seated on a rear seat of the vehicle 100, and the like. The electric system control device 15 is a device of an electric system other than the above-described devices 11 to 14. Therefore, the electric system control device 15 includes, for example, a headlight and a position light of the vehicle 100, a seat heater that heats a seat of the vehicle 100, an in-vehicle light (ambient light) that lights up the interior of the vehicle 100, and the like.

The electric power sensor 21 is a sensor for detecting electric power consumed in each vehicle device 10. The electric power sensor 21 detects, for each vehicle device 10, electric power consumed in the vehicle device. The electric power sensor 21 transmits a signal relating to the consumed electric power to the ECU 30 via the in-vehicle network 5 at predetermined intervals. In the present embodiment, the electric power sensor 21 includes a traveling electric power sensor 211, an air-conditioning electric power sensor 212, a battery temperature control electric power sensor 213, an entertainment electric power sensor 214, and an electric system electric power sensor 215. The electric power sensor 21 may include other sensors that detect electric power consumed in the vehicle device 10.

The traveling electric power sensor 211 is connected to a control circuit of the traveling control device 11 and detects electric power consumed by the traveling control device 11. The traveling electric power sensor 211 includes, for example, a sensor that detects a current flowing through an electric motor, a generator, and a steering motor or a voltage applied to these components. The air-conditioning electric power sensor 212 is connected to a control circuit of the air-conditioning control device 12 and detects electric power consumed by the air-conditioning control device 12. The air-conditioning electric power sensor 212 includes, for example, a sensor that detects a current flowing through a compressor and a blower fan or a voltage applied to these components. The battery temperature control electric power sensor 213 is connected to a control circuit of the battery temperature control device 13 and detects electric power consumed by the battery temperature control device 13. The battery temperature control electric power sensor 213 includes, for example, a sensor that detects a current flowing through a pump, a heater, or a cooler or a voltage applied to these components. The entertainment electric power sensor 214 is connected to a control circuit of the entertainment control device 14 and detects electric power consumed by the entertainment control device 14. The entertainment electric power sensor 214 includes a sensor that detects a current flowing through the RSE system or a voltage applied to the RSE system. The electric system electric power sensor 215 is connected to a control circuit of the electric system control device 15 and detects electric power consumed by the electric system control device 15. The electric system electric power sensor 215 includes a sensor that detects a current flowing through a headlight, a position light, a seat heater, an in-vehicle light, and the like or a voltage applied to these components.

The vehicle sensor 22 is a sensor for detecting a value of a parameter necessary for control of the vehicle device 10. In addition, the vehicle sensor 22 is also a sensor for detecting a value of a parameter necessary to determine whether the vehicle 100 is traveling or stopped. The vehicle sensor 22 transmits a signal including a value of a parameter necessary for control of the vehicle device 10 to the ECU 30 via the in-vehicle network 5 at predetermined intervals.

Specifically, for example, the vehicle sensor 22 includes sensors that detect amounts of depression of a throttle pedal and a brake pedal and a steering angle of a steering wheel. The amounts of depression of the throttle pedal and the brake pedal and the steering angle of the steering wheel are parameters necessary for control of the traveling control device 11. In addition, the vehicle sensor 22 includes sensors that detect a speed and an acceleration of the vehicle 100. The speed and acceleration of the vehicle 100 are parameters necessary for control of the traveling control device 11, and are also parameters necessary to determine whether the vehicle 100 is traveling or stopped. In addition, the vehicle sensor 22 includes a sensor that detects a temperature in the interior of the vehicle 100. The temperature in the interior of the vehicle 100 is a parameter necessary for control of the air-conditioning control device 12. Further, the vehicle sensor 22 includes a sensor that detects a temperature of a battery of the vehicle 100. The temperature of the battery of the vehicle 100 is a parameter necessary for control of the battery temperature control device 13. In addition, the vehicle sensor 22 includes an input result in an operation input device of the RSE system. The input result in the operation input device of the RSE system is a parameter necessary for control of the entertainment control device 14. Further, the vehicle sensor 22 includes an illuminance sensor that detects an illuminance outside the vehicle 100. The illuminance outside the vehicle 100 is a parameter necessary for control of the electric system control device 15.

The HMI 25 is an interface for inputting and outputting information between an occupant, including a driver, and the vehicle control system 1. The HMI 25 includes an output device for providing various types of information to the occupant, and an input device for enabling the occupant to perform an input operation.

Specifically, the HMI 25 includes, as the output device, a display 26 for displaying character information or image information. The display 26 is an example of a display device that displays an image. The display 26 is a display device of any type, such as a liquid crystal display or an organic EL display. The display 26 receives an image signal from the ECU 30 via the in-vehicle network 5 and displays an image in accordance with the image signal. In addition, the HMI 25 includes, as the output device, a speaker 27 for outputting voice. The speaker 27 receives a voice signal from the ECU 30 via the in-vehicle network 5 and outputs voice in accordance with the voice signal. Note that the HMI 25 may include, as the output device, a device (for example, a vibration device) other than the display 26 and the speaker 27, which provides various types of information to the occupant including a driver.

In addition, the HMI 25 includes, as the input device, a touch panel 28 that performs an input when touched by the occupant. The touch panel 28 outputs an operation signal to the ECU 30 via the in-vehicle network 5 when touched by the occupant. Note that the HMI 25 may include, as the input device, a device (for example, a button, a switch, or the like) other than the touch panel 28 for enabling the occupant to perform the input operation.

### Overview of ECU

The ECU 30 functions as a control device that executes the plurality of control functions in the vehicle 100. The ECU 30 also functions as a control device that controls display on the display of the vehicle 100 and restricts the control functions based on the electric power consumption amount. In the example illustrated in FIG. 1, the vehicle control system 1 includes the single ECU 30, but may include a plurality of the ECUs 30 divided for each of the functions. The ECU 30 includes a communication interface 31, a storage unit 32, and a processor 33. Note that the communication interface 31, the storage unit 32, and the processor 33 may be separate circuits or may be configured as a single integrated circuit.

The communication interface 31 is a circuit for connecting the ECU 30 to the in-vehicle network 5. The communication interface 31 transmits signals received from the electric power sensor 21, the vehicle sensor 22, and the touch panel 28 to the processor 33. In addition, the communication interface 31 transmits a signal output from the processor 33 to the display 26 and speaker 27 of the HMI 25.

The storage unit 32 stores data. The storage unit 32 includes at least one of a volatile semiconductor memory, a nonvolatile semiconductor memory, a hard disk drive (HDD), and a solid state drive (SSD), for example. The storage unit 32 stores a program that is executed by the processor 33. Further, the storage unit 32 stores data transmitted from the various sensors.

The processor 33 includes one or a plurality of central processing units (CPUs) and peripheral circuits thereof. The processor 33 may further include other computation circuits, such as a logic computation unit or a numerical computation unit. The processor 33 executes a computer program stored in the storage unit 32.

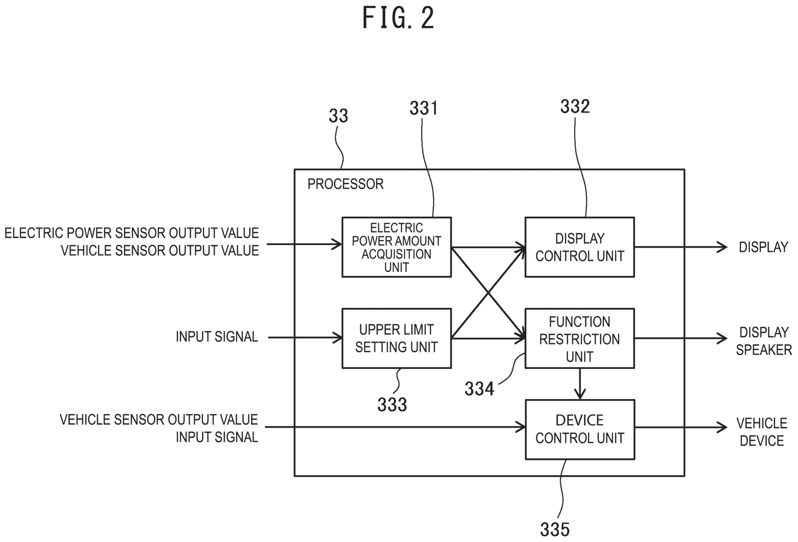

FIG. 2 is a functional block diagram of the processor 33 of the ECU 30. As illustrated in FIG. 2, the processor 33 includes an electric power amount acquisition unit 331, a display control unit 332, an upper limit setting unit 333, a function restriction unit 334, and a device control unit 335. These units included in the processor 33 are, for example, functional modules that are implemented by a computer program operating on the processor 33. Alternatively, the units included in the processor 33 may be mounted on the ECU 30 as independent integrated circuits, microprocessors, or firmware.

The electric power amount acquisition unit 331 acquires electric power consumption amounts consumed by each of the plurality of control functions of the vehicle 100 while the vehicle 100 is traveling and while the vehicle 100 is stopped. In the present embodiment, the electric power consumed by each vehicle device 10, which is detected by the electric power sensor 21, and the speed of the vehicle 100, which is detected by the vehicle sensor 22, are input to the electric power amount acquisition unit 331. The electric power amount acquisition unit 331 acquires the electric power consumption amount consumed by each control function of the vehicle 100 while the vehicle 100 is traveling and the electric power consumption amount consumed by each control function of the vehicle 100 while the vehicle 100 is stopped, and outputs the acquired electric power consumption amounts to the display control unit 332 and the function restriction unit 334.

In the present embodiment, when the speed of the vehicle 100 detected by the vehicle sensor 22 is not zero, the electric power amount acquisition unit 331 calculates the electric power consumption amount consumed by the traveling control device 11 while the vehicle 100 is traveling by integrating the electric power consumed by the traveling control device 11 detected by the traveling electric power sensor 211. In addition, when the speed of the vehicle 100 detected by the vehicle sensor 22 is zero, the electric power amount acquisition unit 331 calculates the electric power consumption amount consumed by the traveling control device 11 while the vehicle 100 is stopped by integrating the electric power consumed by the traveling control device 11 detected by the traveling electric power sensor 211. Similarly, the electric power amount acquisition unit 331 calculates the electric power consumption amounts consumed by the air-conditioning control device 12, the battery temperature control device 13, the entertainment control device 14, and the electric system control device 15 while the vehicle 100 is traveling and while the vehicle 100 is stopped on the basis of the output from the vehicle sensor 22 and the outputs from the air-conditioning electric power sensor 212, the battery temperature control electric power sensor 213, the entertainment electric power sensor 214, and the electric system electric power sensor 215. The electric power consumption amounts calculated in this manner are stored in the storage unit 32, and are acquired by the electric power amount acquisition unit 331 when necessary.

In addition, in the present embodiment, the electric power amount acquisition unit 331 acquires electric power consumption amounts from various starting times. For example, the electric power amount acquisition unit 331 acquires the electric power consumption amounts consumed while the vehicle 100 is traveling and while the vehicle 100 is stopped by each control function from the time when an ignition switch of the vehicle 100 is turned on (when the vehicle 100 is started). In addition, the electric power amount acquisition unit 331 acquires electric power consumption amounts consumed while the vehicle 100 is traveling and while the vehicle 100 is stopped by each control function from the time when external charging to the battery of the vehicle 100 is previously performed. The electric power amount acquisition unit 331 may acquire the electric power consumption amounts from a starting time other than the above times (for example, when the vehicle 100 is manufactured).

The display control unit 332 causes the display 26 to display, for each of the control functions, a parameter that varies according to an electric power consumption amount consumed by a respective control function while the vehicle 100 is traveling and a parameter that varies according to an electric power consumption amount consumed by this respective control function while the vehicle 100 is stopped. Therefore, according to the present embodiment, the electric power consumption amount consumed by each control function while the vehicle 100 is traveling and the electric power consumption amount consumed by each control function while the vehicle 100 is stopped are separately displayed on the display 26. Therefore, the occupant of the vehicle 100 can more accurately grasp how the electric power is consumed in each control function, and can appropriately execute the control function in consideration of electric power consumption.

In the present embodiment, the electric power consumption amount consumed by each control function output from the electric power amount acquisition unit 331 and an upper limit ratio set by the upper limit setting unit 333 are input to the display control unit 332. Then, the display control unit 332 outputs a display signal including information to be displayed on the display 26 to the display 26.

In the present embodiment, the parameter that varies according to the electric power consumption amount consumed by each control function while the vehicle 100 is traveling or while the vehicle 100 is stopped is a ratio of the electric power consumption amount consumed by a respective control function while the vehicle 100 is traveling or while the vehicle 100 is stopped to a total electric power consumption amount consumed by the vehicle 100. Therefore, in the present embodiment, the display control unit 332 causes the display 26 to display a ratio of the electric power consumption amount consumed by each control function while the vehicle 100 is traveling to the total electric power consumption amount and a ratio of the electric power consumption amount consumed by each control function while the vehicle 100 is stopped to the total electric power consumption amount. In addition, the display control unit 332 may cause the display 26 to display, regardless of whether the vehicle 100 is traveling or stopped, a ratio of the electric power consumption amount consumed by each control function to the total electric power consumption amount (hereinafter, a ratio of the electric power consumption amount consumed by a certain control function to the total electric power consumption amount is also referred to as an "electric power consumption ratio" for a respective control function). In this way, the electric power consumption ratio for each control function is displayed on the display, so that the occupant can easily grasp a breakdown of an electric power consumption amount used in executing each control function.

In addition, in the present embodiment, the display control unit 332 displays an upper limit ratio (upper limit value) of the electric power consumption amount consumed by each control function to the total electric power consumption amount, in addition to the electric power consumption ratio for each control function. The upper limit ratio is set by the upper limit setting unit 333. However, the upper limit ratio may also be a predetermined constant ratio without being set by the upper limit setting unit 333.

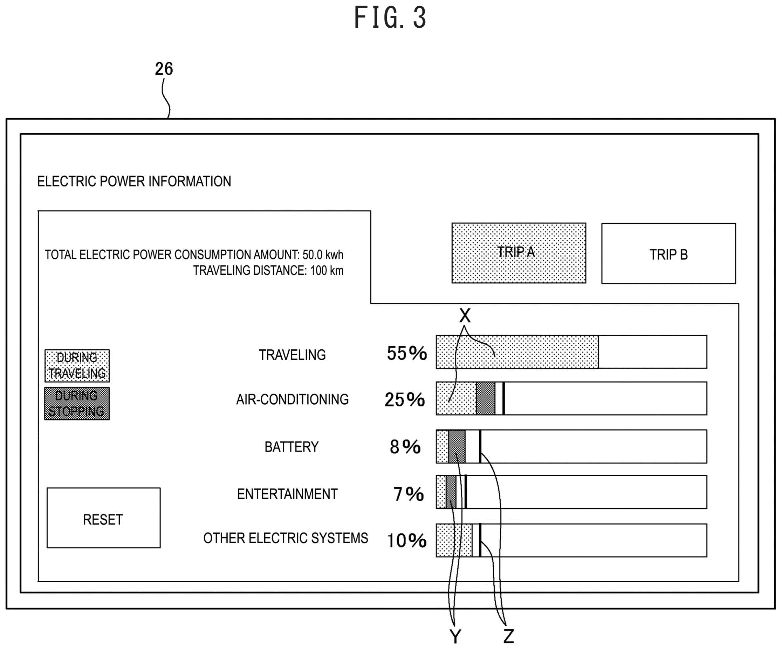

FIG. 3 illustrates an example of a screen showing electric power information displayed on the display 26 by the display control unit 332. In the example illustrated in FIG. 3, the electric power consumption ratio for each control function is displayed in a bar graph on the screen showing the electric power information. In particular, in the example illustrated in FIG. 3, the electric power consumption ratio for each control function while the vehicle 100 is traveling is displayed by a lightly stippled bar X. In addition, the electric power consumption ratio for each control function while the vehicle 100 is stopped is displayed by a densely stippled bar Y. The lightly stippled bar X and the densely stippled bar Y corresponding to the same control function are displayed adjacent to each other. Further, in the example illustrated in FIG. 3, a line Z representing the upper limit ratio corresponding to each control function is displayed in the bar graph displaying the electric power consumption ratio for each control function.

As illustrated in FIG. 3, in the present embodiment, in the screen displaying the electric power information, the electric power consumption ratio by the traveling control device 11 while the vehicle 100 is traveling is displayed as "traveling" by the lightly stippled bar X on the display 26. In addition, the electric power consumption ratio by the traveling control device 11 while the vehicle 100 is stopped is displayed by the densely stippled bar Y on the display 26 (in the example illustrated in FIG. 3, the electric power consumption ratio is zero and is not displayed). In addition, a bar length obtained by combining the lightly stippled bar X and the densely stippled bar Y represents the electric power consumption ratio by the traveling control device 11 (regardless of whether the vehicle is traveling or stopped). Further, in the present embodiment, the electric power consumption ratio by the traveling control device 11 (regardless of whether the vehicle is traveling or stopped) is displayed in numerical form (55% in the example illustrated in FIG. 3) on the display 26.

In addition, in the present embodiment, in the screen displaying the electric power information, the electric power consumption ratio by the air-conditioning control device 12 while the vehicle 100 is traveling is displayed as "air conditioning" by the lightly stippled bar X on the display 26. In addition, the electric power consumption ratio by the air-conditioning control device 12 while the vehicle 100 is stopped is displayed by the densely stippled bar Y on the display 26. Furthermore, the upper limit ratio of the electric power consumption amount consumed by the air-conditioning control device 12 to the total electric power consumption amount is displayed by the line Z on the display 26. In addition, the electric power consumption ratio by the air-conditioning control device 12 (regardless of whether the vehicle is traveling or stopped) is displayed in numerical form on the display 26. In the example illustrated in FIG. 3, the electric power consumption ratios by the battery temperature control device 13, the entertainment control device 14, and the electric system control device 15 and the upper limit ratios corresponding thereto are also displayed on the display 26.

As described above, in the present embodiment, the electric power consumption ratio for each control function is represented as a figure in a bar graph. This enables the occupant to intuitively grasp the ratio of the electric power consumption amount consumed by each control function. In addition, the bar X representing the electric power consumption ratio by each control function while the vehicle 100 is traveling is displayed adjacent to the bar Y representing the electric power consumption ratio by a respective control function while the vehicle 100 is stopped. As a result, the occupant can intuitively and easily grasp the electric power consumption ratio while the vehicle 100 is traveling and the electric power consumption ratio while the vehicle 100 is stopped. In addition, in the present embodiment, in the screen displaying the electric power information, a line indicating the upper limit ratio corresponding to each control function is displayed on the display 26. This enables the occupant to easily recognize the control function whose electric power consumption ratio is approaching or exceeding the upper limit ratio.

In addition, in the present embodiment, in the screen displaying the electric power information, the display 26 may be caused to display the electric power consumption ratio for each control function from different starting times. In the example illustrated in FIG. 3, a trip A is selected, which indicates the electric power consumption ratio for each control function from the time when the ignition switch of the vehicle 100 is turned on. On the other hand, when a trip B is selected, the electric power consumption ratio for each control function from the time when external charging to the battery of the vehicle 100 is previously performed is displayed.

Note that, in the example illustrated in FIG. 3, the display control unit 332 causes the electric power consumption ratio for each control function to be displayed in a bar graph. However, the display control unit 332 may cause a value of a parameter that varies according to the electric power consumption amount to be displayed in any form, as long as the value of the parameter is displayed as a figure whose area varies according to the value of the parameter. Therefore, the display control unit 332 may cause, for example, the electric power consumption ratio for each control function to be displayed in a pie chart. In this case, it is preferable that a figure corresponding to a parameter that varies according to the electric power consumption amount consumed by any one control function while the vehicle 100 is traveling and a figure corresponding to a parameter that varies according to the electric power consumption amount consumed by the same control function while the vehicle is stopped be displayed adjacent to each other.

In addition, in the example illustrated in FIG. 3, the display control unit 332 causes the upper limit ratio of the electric power consumption amount consumed by each control function to the total electric power consumption amount to be displayed as the line Z. However, the display control unit 332 may display, in any form, the upper limit value, as long as the upper limit value of a parameter that varies according to the electric power consumption amount consumed by each control function can be displayed. Therefore, the display control unit 332 may display a specific numerical value as the upper limit value.

Further, in the present embodiment, the parameter that varies according to the electric power consumption amount consumed by each control function while the vehicle 100 is traveling or while the vehicle 100 is stopped is the ratio of the electric power consumption amount consumed by a respective control function while the vehicle 100 is traveling or while the vehicle 100 is stopped to the total electric power consumption amount consumed by the vehicle 100. However, another parameter may be used as the parameter that varies according to the electric power consumption amount consumed by each control function while the vehicle 100 is traveling or while the vehicle 100 is stopped. For example, as the parameter that varies according to the electric power consumption amount consumed by each control function while the vehicle 100 is traveling or while the vehicle 100 is stopped, the electric power consumption amount itself consumed by a respective control function while the vehicle 100 is traveling or while the vehicle 100 is stopped may be used. This enables the occupant to grasp the specific electric power consumption amount consumed by the control function while the vehicle 100 is traveling or while the vehicle 100 is stopped.

The upper limit setting unit 333 sets an upper limit value of the parameter that varies according to the electric power consumption amount consumed by each of at least some of the plurality of control functions. In the present embodiment, the upper limit setting unit 333 sets an upper limit ratio of the electric power consumption amount consumed by a control function-whose electric power consumption is adjustable by the occupant-among the plurality of control functions to the total electric power consumption amount. In particular, in the present embodiment, the upper limit setting unit 333 sets the upper limit ratio on the basis of an input by the occupant via the input device.

In addition, in the present embodiment, the upper limit setting unit 333 sets an operation mode for each control function when the electric power consumption ratio for a respective control function exceeds the upper limit ratio. In the present embodiment, the upper limit setting unit 333 sets, as an operation mode to be executed by the function restriction unit 334 for a respective control function when the electric power consumption ratio for each control function exceeds the upper limit ratio, either a notification mode for notifying the occupant, via the output device of the HMI 25, of the fact that the upper limit ratio has been exceeded, or an execution mode for suppressing or stopping this respective control function. In particular, in the present embodiment, the upper limit setting unit 333 sets the operation mode on the basis of an input by the occupant via the input device.

In the present embodiment, an input signal is input from the touch panel 28 to the upper limit setting unit 333. Then, the upper limit setting unit 333 outputs the upper limit ratio (upper limit value) of the electric power consumption amount consumed by each control function to the total electric power consumption amount to the display control unit 332 and the function restriction unit 334.

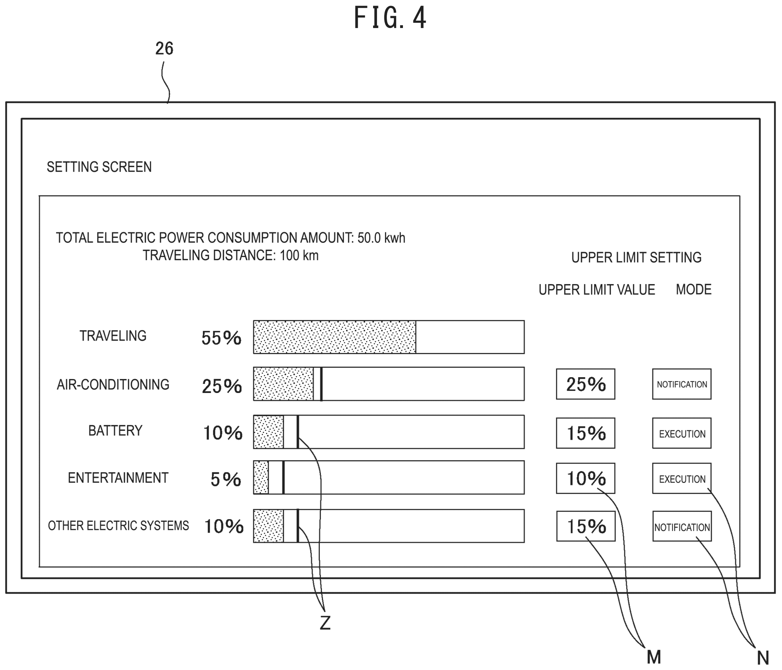

FIG. 4 illustrates an example of a setting screen displayed on the display 26 by the upper limit setting unit 333. As illustrated in FIG. 4, the electric power consumption ratio for each control function is displayed in a bar graph on the setting screen, similar to the screen showing the electric power information illustrated in FIG. 3. In addition, the upper limit ratio for each control function is displayed by the line Z in a bar graph on the setting screen, similar to the screen showing the electric power information illustrated in FIG. 3.

Further, as illustrated in FIG. 4, in the setting screen, for the control function whose electric power consumption is adjustable by the occupant, a currently set upper limit ratio is displayed in a region M of the screen of the display 26, and a currently set operation mode is displayed in a region N of the screen of the display 26. The occupant of the vehicle 100 can change the setting of the upper limit ratio by touching the region M. Similarly, the occupant of the vehicle 100 can change the setting of the operation mode by touching the region N. Specifically, when the touch panel 28 detects that the occupant has touched the region M corresponding to an arbitrary control function, the upper limit setting unit 333 changes the setting of the upper limit ratio for this control function on the basis of an input signal from the touch panel 28. In addition, when the touch panel 28 detects that the occupant has touched the region N corresponding to the arbitrary control function, the upper limit setting unit 333 changes the operation mode for this control function on the basis of an input signal from the touch panel 28.

When the value of a parameter that varies according to the electric power consumption amount consumed by the arbitrary control function of the vehicle 100 exceeds an upper limit value corresponding to this control function, the function restriction unit 334 suppresses or stops this control function or prompts the occupant to suppress or stop this control function. In the present embodiment, when the electric power consumption ratio for each control function exceeds the upper limit ratio for a respective control function, the function restriction unit 334 performs suppression or the like of this respective control function or makes a request to the occupant for such suppression or the like. This can prevent the electric power consumption amount for the arbitrary control function from excessively increasing.

The electric power consumption amount consumed by each control function is input from the electric power amount acquisition unit 331 to the function restriction unit 334. In addition, the upper limit ratio and the operation mode set by the upper limit setting unit 333 are input to the function restriction unit 334. The function restriction unit 334 outputs a display signal and a voice signal to the display 26 and the speaker 27, and also outputs a signal relating to function restriction of each vehicle device 10 to the device control unit 335.

In the present embodiment, the function restriction unit 334 switches the response when the electric power consumption ratio for each control function exceeds the upper limit ratio for a respective control function, in accordance with the operation mode set by the upper limit setting unit 333.

In the present embodiment, when the operation mode is set to the notification mode by the upper limit setting unit 333, the function restriction unit 334 provides the occupant with a prompting notification to the effect that, when the electric power consumption ratio for each control function exceeds the upper limit ratio for a respective control function, the control in this respective control function is to be switched to a mode in which the electric power consumption by this respective control function is reduced. Accordingly, the occupant can recognize that the electric power consumption amount for an arbitrary control function is increasing, and can also select whether to switch the operation of this control function according to the situation.

Specifically, when the operation mode is set to the notification mode and the electric power consumption ratio by the air-conditioning control device 12 exceeds the upper limit ratio therefor, the function restriction unit 334 causes the display 26 to display a notification prompting the occupant to switch the control in the air-conditioning control device 12 to a mode in which the electric power consumption by the air-conditioning control device 12 is reduced, or causes the speaker 27 to output the notification by voice. For example, in such a case, the function restriction unit 334 causes a notification to be displayed or output by voice, the notification prompting the occupant to turn off the air-conditioning control device 12 (for example, to stop the air-conditioning control in the interior of the vehicle 100) or to change a set temperature in the interior of the vehicle 100 in the air-conditioning control device 12. When such a notification is displayed or output by voice, the occupant operates an input device such as the touch panel 28 to control the air-conditioning control device 12 by himself/herself.

In addition, when the operation mode is set to the notification mode and the electric power consumption ratio by the battery temperature control device 13 exceeds the upper limit ratio therefor, the function restriction unit 334 causes a notification to be displayed or output by voice, the notification prompting the occupant to turn off the battery temperature control device 13 or to change a target temperature of the cooling water in the battery temperature control device 13. In addition, when the operation mode is set to the notification mode and the electric power consumption ratio by the entertainment control device 14 exceeds the upper limit ratio therefor, the function restriction unit 334 causes a notification to be displayed or output by voice, the notification prompting the occupant to turn off the entertainment control device 14. Further, when the operation mode is set to the notification mode and the electric power consumption ratio by the electric system control device 15 exceeds the upper limit ratio therefor, the function restriction unit 334 causes a notification to be displayed or output by voice, the notification prompting the occupant to turn off some functions of the electric system control device 15 or to change the control mode of some functions (for example, to change the set temperature of the seat heater).

On the other hand, when the operation mode is set to the execution mode by the upper limit setting unit 333 and the electric power consumption ratio for each control function exceeds the upper limit ratio for a respective control function, the function restriction unit 334 notifies the occupant of a request for consent or refusal to switch the control in this respective control function to a mode in which the electric power consumption by this respective control function is reduced. This enables the occupant to recognize that the electric power consumption amount for an arbitrary control function is increasing, and to easily switch the operation of the control function.

Specifically, when the operation mode is set to the execution mode and the electric power consumption ratio by the air-conditioning control device 12 exceeds the upper limit ratio therefor, the function restriction unit 334 causes the display 26 to display a notification requesting consent or refusal to switch the control in the air-conditioning control device 12 to a mode in which the electric power consumption by the air-conditioning control device 12 is reduced, or causes the speaker 27 to output the notification by voice. For example, in such a case, the function restriction unit 334 causes a notification to be displayed or output by voice, the notification requesting consent or refusal to change the air-conditioning control device 12 to an off state (for example, to stop the air-conditioning control in the interior of the vehicle 100) or to change a set temperature in the interior of the vehicle 100 in the air-conditioning control device 12. When such a notification is displayed or output by voice, the occupant operates an input device such as the touch panel 28 to input consent or refusal for such a change, and the function restriction unit 334 controls the air-conditioning control device 12 according to the consent or refusal. Similarly, for the other vehicle devices 10, when the operation mode is set to the execution mode and the electric power consumption ratio by the vehicle device 10 exceeds the upper limit ratio therefor, the function restriction unit 334 causes a notification requesting consent or refusal to switch a control mode to be displayed or output by voice.

However, in the present embodiment, after the function restriction unit 334 provides the user with a notification prompting a change of the control mode for an arbitrary control function or a notification requesting consent or refusal for a change of the control mode, even when the value of a parameter that varies according to the electric power consumption amount consumed by this control function again exceeds the upper limit value corresponding to this control function, the function restriction unit 334 does not provide the above-described notification until the ignition of the vehicle 100 is turned off. Therefore, for example, after the function restriction unit 334 provides the notification prompting the user to turn off the air-conditioning control device 12, even when the electric power consumption ratio by the air-conditioning control device 12 again exceeds the upper limit ratio therefor, the function restriction unit 334 does not provide the notification prompting the user to turn off the air-conditioning control device 12. This suppresses the same notification from being provided multiple times even though the occupant recognizes it.

In addition, when the total electric power consumption amount of the vehicle 100 acquired by the electric power amount acquisition unit 331 is less than a predetermined reference electric power amount, the function restriction unit 334, even if the value of a parameter that varies according to the electric power consumption amount consumed by an arbitrary control function of the vehicle 100 exceeds the upper limit value corresponding to this control function, neither suppresses or stops this control function nor prompts the occupant to suppress or stop this control function. Therefore, for example, when the total electric power consumption amount of the vehicle 100 is less than the reference electric power amount, the function restriction unit 334, even if the electric power consumption ratio by the air-conditioning control device 12 exceeds the upper limit ratio therefor, does not provide a notification prompting the user to switch the control in the air-conditioning control device 12 to a mode in which the electric power consumption by the air-conditioning control device 12 is reduced or a notification requesting consent or refusal for such switching.

Here, immediately after the vehicle 100 is started, for example, before the vehicle 100 travels, use of the air-conditioning control device 12 may cause a deviation to occur in the electric power consumption ratio between the control functions. In the present embodiment, the notification is not provided until the total electric power consumption amount reaches the reference electric power amount, and thus an inappropriate notification is prevented from being provided.

Note that in the present embodiment, when the operation mode is set to the execution mode and the electric power consumption ratio for each control function exceeds the upper limit ratio for a respective control function, the function restriction unit 334 notifies the occupant of a request for consent or refusal to switch the control of this respective control function. However, in such a case, the function restriction unit 334 may switch the control in the control function to a mode in which the electric power consumption by this respective control function is reduced without providing the notification to the occupant. In particular, in such a case, the function restriction unit 334 may stop this respective control function without providing the notification to the occupant. Accordingly, the occupant does not need to input consent or refusal in response to the notification requesting the consent or refusal, and thus the work burden on the occupant can be reduced.

The device control unit 335 controls the vehicle device 10 that executes each control function mainly on the basis of the output of the vehicle sensor 22 and the input signal from an input device such as the touch panel 28. The values of various parameters detected by the vehicle sensor 22 and the input signal from an input device such as the touch panel 28 are input to the device control unit 335. In addition, a signal relating to function restriction of the vehicle device 10 is input from the function restriction unit 334 to the device control unit 335. In addition, the device control unit 335 outputs a control signal to each vehicle device 10.

The device control unit 335 controls the vehicle device 10 basically on the basis of the output of the vehicle sensor 22 and the input signal from the input device. For example, the device control unit 335 controls the air-conditioning control device 12 such that the temperature in the interior of the vehicle 100 approaches the set temperature on the basis of the temperature in the interior of the vehicle 100 detected by the vehicle sensor 22 and the set temperature input by the occupant through the touch panel 28.

However, when a signal relating to function restriction of the vehicle device 10 is input from the function restriction unit 334, the device control unit 335 controls the vehicle device 10 in accordance with the signal. For example, when the device control unit 335 receives, from the function restriction unit 334, a signal instructing a change in the set temperature of the interior of the vehicle 100 in the air-conditioning control device 12, the device control unit 122 controls the air-conditioning control device 12 so that the set temperature approaches the set temperature according to the instruction rather than the set temperature input by the occupant through the touch panel 28.

### Flowchart

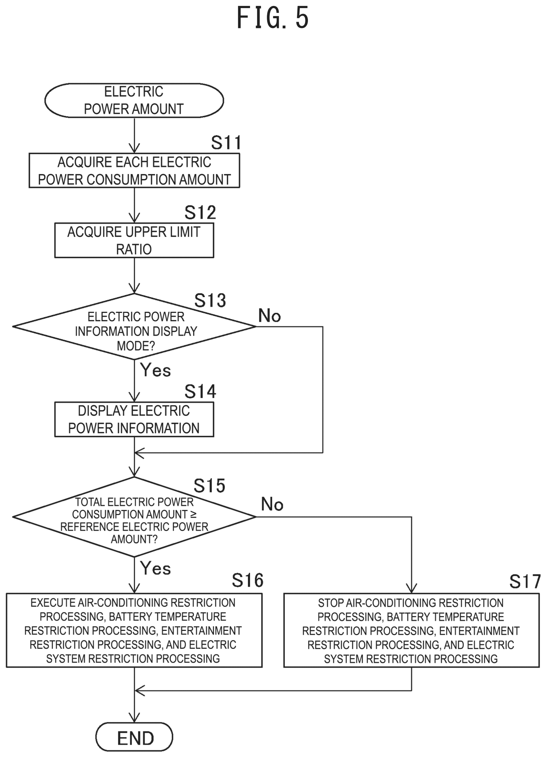

Next, electric power amount management processing that is executed by the control device will be described with reference to FIGS. 5 to 8. FIG. 5 is a flowchart showing a flow of electric power amount management processing. The electric power amount management processing shown is executed by the processor 33 at fixed time intervals.

As shown in FIG. 5, the electric power amount acquisition unit 331 first acquires electric power consumption amounts consumed by each of the control functions of the vehicle 100 while the vehicle 100 is traveling and while the vehicle 100 is stopped (step S11). Next, the display control unit 332 and the function restriction unit 334 acquire the upper limit ratio set by the upper limit setting unit 333 for each of the control functions (step S12). Next, the display control unit 332 determines whether the electric power information display mode is currently set (step S13). The setting of the electric power information display mode is performed by, for example, an input from the occupant through the touch panel 28. When it is determined in step S13 that the electric power information display mode is set, the display control unit 332 causes the display 26 to display a screen of the electric power information as illustrated in FIG. 3 (step S14). On the other hand, when it is determined in step S13 that the electric power information display mode is not set, the display control unit 332 does not cause the display 26 to display the screen of the electric power information.

Next, the function restriction unit 334 determines whether the total electric power consumption amount of the vehicle 100 acquired by the electric power amount acquisition unit 331 is equal to or greater than a predetermined reference electric power amount (step S15). When it is determined in step S15 that the total electric power consumption amount of the vehicle 100 is equal to or greater than the reference electric power amount, the function restriction unit 334 executes air-conditioning restriction processing, battery temperature restriction processing, entertainment restriction processing, and electric system restriction processing (step S16). On the other hand, when it is determined in step S15 that the total electric power consumption amount of the vehicle 100 is less than the reference electric power amount, the function restriction unit 334 does not execute the above restriction processing (step S17).

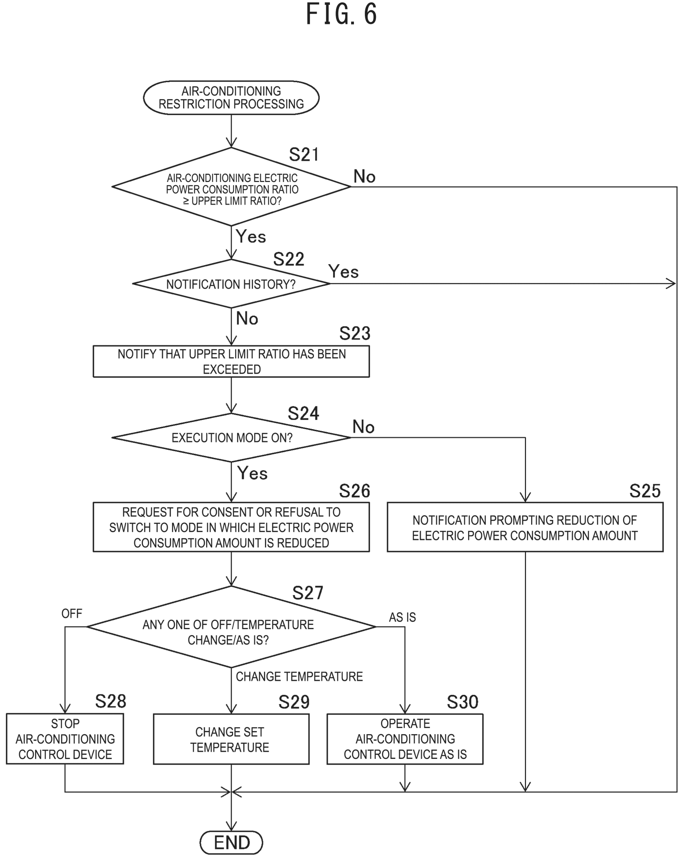

FIG. 6 is a flowchart showing a flow of air-conditioning restriction processing. The air conditioning restriction processing shown is executed by the processor 33 at regular time intervals while the air-conditioning restriction processing is being executed in step S16 of FIG. 5.

As shown in FIG. 6, in the air-conditioning restriction processing, the function restriction unit 334 determines whether the electric power consumption ratio by the air-conditioning control device 12 is equal to or greater than the corresponding upper limit ratio (step S21). If it is determined in step S21 that the electric power consumption ratio by the air-conditioning control device 12 is less than the corresponding upper limit ratio, the processing is ended. On the other hand, if it is determined in step S21 that the electric power consumption ratio by the air-conditioning control device 12 is equal to or greater than the corresponding upper limit ratio, the function restriction unit 334 determines whether there is a history of a notification indicating that the upper limit ratio has been exceeded (step S22). If it is determined in step S22 that there is a history of a notification indicating that the upper limit ratio has been exceeded, the processing is ended. On the other hand, if it is determined in step S22 that there is no history of a notification indicating that the upper limit ratio has been exceeded, the function restriction unit 334 notifies that the upper limit ratio has been exceeded (step S23). Specifically, the function restriction unit 334 causes the display 26 to display a notification indicating that the electric power consumption ratio by the air-conditioning control device 12 has exceeded the upper limit ratio, or causes the speaker 27 to output the notification by voice.

Next, the function restriction unit 334 determines whether the current operation mode is set to the execution mode by the upper limit setting unit 333 (step S24). If it is determined in step S24 that the current operation mode is not set to the notification mode, the function restriction unit 334 provides a notification prompting the occupant to switch the control in the air-conditioning control device 12 to a mode in which the electric power consumption is reduced (step S25).

On the other hand, if it is determined in step S24 that the current operation mode is set to the execution mode, the function restriction unit 334 provides a notification requesting consent or refusal to switch the control in the air-conditioning control device 12 to a mode in which the electric power consumption is reduced (step S26). The function restriction unit 334 then determines whether there is an input indicating that the air-conditioning control device 12 is to be changed to an off state, the set temperature is to be changed, or the switching is not to be performed (step S27). If it is determined in step S27 that there is an input indicating that the air-conditioning control device 12 is to be changed to an off state, the function restriction unit 334 transmits a signal for stopping the air-conditioning control device 12 to the device control unit 335 (step S28). If it is determined in step S27 that there is an input indicating that the set temperature is to be changed, the function restriction unit 334 transmits a signal for changing the set temperature of the air-conditioning control device 12 to the device control unit 335 (step S29). If it is determined in step S27 that there is an input indicating that the switching is not to be performed, the function restriction unit 334 transmits a signal indicating that the control of the air-conditioning control device 12 is not to be changed to the device control unit 335 (step S30).

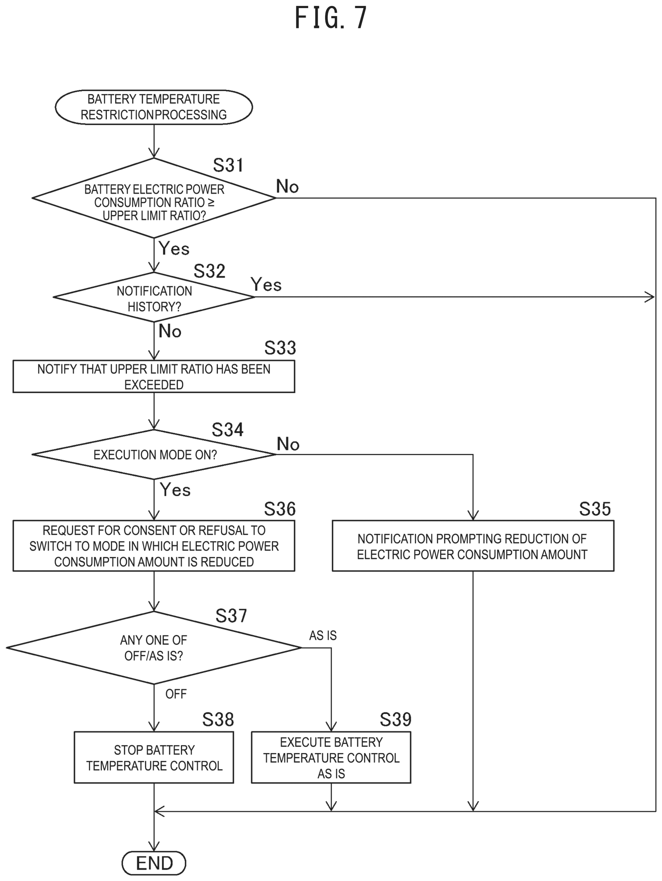

FIG. 7 is a flowchart showing a flow of battery temperature restriction processing. The battery temperature restriction processing shown is executed by the processor 33 at regular time intervals while the battery temperature restriction processing is being executed in step S16 of FIG. 5. Note that the entertainment restriction processing is also performed in the same flow as the flow shown in FIG. 7. Steps S32 to S36 of FIG. 7 are similar to steps S22 to S26 of FIG. 6, and thus description thereof is omitted.

As shown in FIG. 7, in the battery temperature restriction processing, the function restriction unit 334 first determines whether the electric power consumption ratio by the battery temperature control device 13 is equal to or greater than the corresponding upper limit ratio (step S31). If it is determined in step S31 that the electric power consumption ratio by the battery temperature control device 13 is less than the corresponding upper limit ratio, the processing is ended. On the other hand, if it is determined in step S31 that the electric power consumption ratio by the battery temperature control device 13 is equal to or greater than the corresponding upper limit ratio, the function restriction unit 334 determines whether there is a history of a notification indicating that the upper limit ratio has been exceeded (step S32).

When the function restriction unit 334 provides a notification requesting consent or refusal to switch the control in the battery temperature control device 13 to a mode in which the electric power consumption is reduced (step S36), the function restriction unit 334 determines whether there is an input indicating that the battery temperature control device 13 is to be changed to an off state or the switching is not to be performed (step S37). If it is determined in step S37 that there is an input indicating that the battery temperature control device 13 is to be changed to an off state, the function restriction unit 334 transmits a signal for stopping the control of the battery temperature control device 13 to the device control unit 335 (step S38). If it is determined in step S37 that there is an input indicating that the switching is not to be performed, the function restriction unit 334 transmits a signal indicating that the control of the battery temperature control device 13 is not to be changed to the device control unit 335 (step S39).

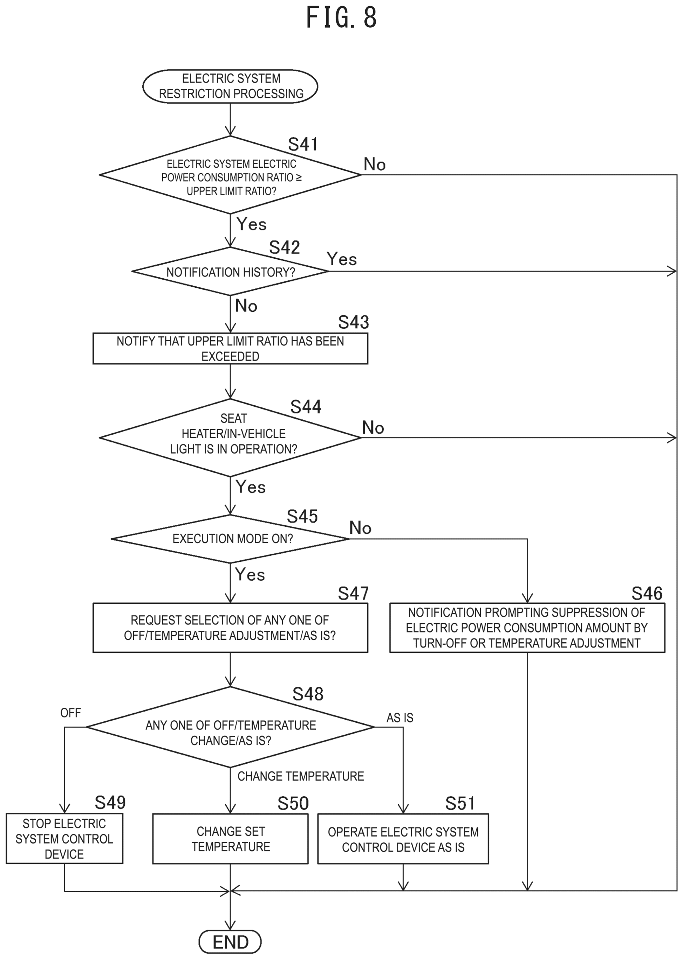

FIG. 8 is a flowchart showing a flow of electric system restriction processing. The electric system restriction processing shown is executed by the processor 33 at regular time intervals while the electric system restriction processing is being executed in step S16 of FIG. 5. Steps S41 to S43 and S45 to S51 of FIG. 8 are similar to steps S21 to S23 and S24 to S30 of FIG. 6, and thus description thereof is omitted.

When the notification indicating that the upper limit ratio has been exceeded is provided in step S43, the function restriction unit 334 determines whether the seat heater or the in-vehicle light of the electric system control device 15 is in operation (step S44). Here, since the headlight, the position light, and the like of the electric system control device 15 are functions necessary for traveling of the vehicle 100, the occupant cannot freely adjust the electric power consumption thereof. Therefore, even when the electric power consumption ratio by the electric system control device 15 exceeds the upper limit ratio, it is not possible to turn off these lights or reduce the light amount. On the other hand, the electric power consumption of the seat heater or the in-vehicle light can be freely adjusted by the occupant. Therefore, in step S44, it is determined whether the seat heater or the in-vehicle light whose electric power consumption can be freely adjusted by the occupant is in operation. If it is determined in step S44 that the seat heater or the in-vehicle light is not in operation, the processing is ended. On the other hand, if it is determined in step S44 that the seat heater or the in-vehicle light is in operation, the function restriction unit 334 determines whether the current operation mode is set to the execution mode (step S45).

Although the preferred embodiments according to the present disclosure have been described above, the present disclosure is not limited to these embodiments, and various modifications and changes can be made within the scope of the claims.

## Claims

1. A control device installed in a vehicle (100), the control device comprising:
an electric power amount acquisition unit (331) configured to acquire an electric power consumption amount consumed by each of a plurality of control functions of the vehicle (100) while the vehicle (100) is traveling and while the vehicle (100) is stopped; and
a display control unit (332) configured to cause a display device (26) of the vehicle (100) to display, for each of the plurality of control functions, a parameter that varies according to an electric power consumption amount consumed by the control function while the vehicle (100) is traveling and a parameter that varies according to an electric power consumption amount consumed by the control function while the vehicle (100) is stopped.

2. The control device according to claim 1, wherein the parameter that varies according to the electric power consumption amount consumed by each control function while the vehicle (100) is traveling or while the vehicle (100) is stopped is a ratio of the electric power consumption amount consumed by the control function while the vehicle (100) is traveling or while the vehicle (100) is stopped to a total electric power consumption amount consumed by the vehicle (100).

3. The control device according to claim 1, wherein the parameter that varies according to the electric power consumption amount consumed by each control function while the vehicle (100) is traveling or while the vehicle (100) is stopped is the electric power consumption amount consumed by the control function while the vehicle (100) is traveling or while the vehicle (100) is stopped.

4. The control device according to any one of claims 1 to 3, wherein
the display control unit (332) displays a value of the parameter that varies according to the electric power consumption amount as a figure having an area that varies according to the value of the parameter, and
a figure corresponding to a parameter that varies according to an electric power consumption amount consumed by one of the plurality of control functions while the vehicle (100) is traveling and a figure corresponding to a parameter that varies according to an electric power consumption amount consumed by the same control function while the vehicle (100) is stopped are displayed adjacent to each other.

5. The control device according to any one of claims 1 to 4, further comprising an upper limit setting unit (333) configured to set an upper limit value of a parameter that varies according to an electric power consumption amount consumed by each of at least one of the plurality of control functions,
wherein the display control unit (332) causes the display device (26) to display the upper limit value of the parameter in addition to a value of each of the parameters.

6. The control device according to any one of claims 1 to 5, further comprising:
an upper limit setting unit (333) configured to set an upper limit value of a parameter that varies according to an electric power consumption amount consumed by each of at least one of the plurality of control functions; and
a function restriction unit (334) configured to, when a value of a parameter that varies according to an electric power consumption amount consumed by one of the plurality of control functions of the vehicle (100) exceeds an upper limit value corresponding to the one of the plurality of control functions, suppress or stop the one of the plurality of control functions or to prompt an occupant of the vehicle (100) to suppress or stop the one of the plurality of control functions.

7. The control device according to claim 6, wherein, when the value of the parameter that varies according to the electric power consumption amount consumed by the one of the plurality of control functions of the vehicle (100) exceeds the upper limit value corresponding to the one of the plurality of control functions, the function restriction unit (334) notifies the occupant of the vehicle (100) of a request for consent or refusal to switch control in the one of the plurality of control functions to a mode in which the electric power consumption by the one of the plurality of control functions is reduced.

8. The control device according to claim 6, wherein, when the value of the parameter that varies according to the electric power consumption amount consumed by the one of the plurality of control functions of the vehicle (100) exceeds the upper limit value corresponding to the one of the plurality of control functions, the function restriction unit (334) provides the occupant of the vehicle (100) with a notification prompting to switch control in the one of the plurality of control functions to a mode in which the electric power consumption by the one of the plurality of control functions is reduced.

9. The control device according to claim 7 or 8, wherein, after the function restriction unit (334) provides a user with the notification for the one of the plurality of control functions, even when the value of the parameter that varies according to the electric power consumption amount consumed by the one of the plurality of control functions again exceeds the upper limit value corresponding to the one of the plurality of control functions, the function restriction unit (334) does not provide the notification until an ignition of the vehicle (100) is turned off.

10. The control device according to claim 6, wherein, when the value of the parameter that varies according to the electric power consumption amount consumed by the one of the plurality of control functions of the vehicle (100) exceeds the upper limit value corresponding to the one of the plurality of control functions, the function restriction unit (334) switches control in the one of the plurality of control functions to a mode in which the electric power consumption by the one of the plurality of control functions is reduced.

11. The control device according to claim 10, wherein, when the value of the parameter that varies according to the electric power consumption amount consumed by the one of the plurality of control functions of the vehicle (100) exceeds the upper limit value corresponding to the one of the plurality of control functions, the function restriction unit (334) stops the one of the plurality of control functions.

12. The control device according to any one of claims 6 to 11, wherein, when a total electric power consumption amount of the vehicle (100) acquired by the electric power amount acquisition unit (331) is less than a predetermined reference electric power amount, even if the value of the parameter that varies according to the electric power consumption amount consumed by the one of the plurality of control functions of the vehicle (100) exceeds the upper limit value corresponding to the one of the plurality of control functions, the function restriction unit (334) neither suppresses or stops the one of the plurality of control function nor prompts the occupant to suppress or stop the one of the plurality of control functions.

13. A control method performed by a control device of a vehicle (100), the control method comprising:
acquiring an electric power consumption amount consumed by each of a plurality of control functions of the vehicle (100) while the vehicle (100) is traveling and while the vehicle (100) is stopped; and
causing a display device (26) of the vehicle (100) to display, for each of the plurality of control functions, a parameter that varies according to an electric power consumption amount consumed by the control function while the vehicle (100) is traveling and a parameter that varies according to an electric power consumption amount consumed by the control function while the vehicle (100) is stopped.

14. A control program used in a vehicle (100) for causing a computer of the vehicle (100) to execute:
acquiring an electric power consumption amount consumed by each of a plurality of control functions of the vehicle (100) while the vehicle (100) is traveling and while the vehicle (100) is stopped; and
causing a display device (26) of the vehicle (100) to display, for each of the plurality of control functions, a parameter that varies according to an electric power consumption amount consumed by the control function while the vehicle (100) is traveling and a parameter that varies according to an electric power consumption amount consumed by the control function while the vehicle (100) is stopped.
